# EUROPEAN PATENT APPLICATION

(11) **EP 2 869 025 A1**
(43) Date of publication of application: **06.05.2015**
(21) Application number: 13809559.1
(22) Date of filing: 13.06.2013
(51) Int. Cl.: G01C 21/00, G01S 5/02, G01S 19/42, G09B 29/00, G09B 29/10

(54) **MOBILE TERMINAL, SYSTEM, AND METHOD**

(30) Priority: 27.06.2012 JP 2012144710
(71) Applicant: NTT Docomo, Inc., Tokyo 100-6150 (JP)
(72) Inventor: TAKAHASHI, Makoto, Tokyo 100-6150 (JP)
(74) Representative: Maury, Richard Philip
(86) International application number: PCT/JP2013/066344
(87) International publication number: WO 2014/002782

(57) **Abstract**

One aspect of the present invention relates to a mobile terminal having a continuous positioning function, including a radio positioning unit configured to derive a position of the mobile terminal in continuous positioning, a movement detection unit configured to detect a movement distance and a traveling direction of the mobile terminal, a target zone setting unit configured to set a target zone based on a confirmed position of the mobile terminal determined as being valid in the continuous positioning and the movement distance and the traveling direction of the mobile terminal detected by the movement detection unit, the target zone comprising an area to which it is estimated that a user has moved and a validity determination unit configured to determine whether the position of the mobile terminal measured by the radio positioning unit is included in the set target zone to determine validity of the measured position of the mobile terminal.

## Description

### TECHNICAL FIELD

The present invention relates to a mobile terminal having a continuous positioning function.

### BACKGROUND ART

In recent years, improved accuracy of base station based positioning at a mobile terminal and emergence of new positioning techniques such as WLAN (Wireless Local Area Network) positioning promise development of location based information services in indoor environments.

In continuous positioning at a conventional mobile terminal, services for measuring movement locus continuously have been achieved by using GPS (Global Positioning System) based positioning with use of GPS, base station based positioning with use of base stations distributed over a mobile communication network, WLAN based positioning with use of WLAN access points and so on.

See JP 2011-191135, JP 2010-223829 and JP 2000-241179, for example.

### SUMMARY OF INVENTION

### [PROBLEM TO BE SOLVED BY THE INVENTION]

However, the GPS based positioning, the base station based positioning and the WLAN based positioning are designed to identify a current position from radio information obtained at each time point, and there are some problems in that positioning results may change even under a stationary state depending on wave environments, positioning results having a direction opposite to the traveling direction may be obtained, and so on.

In view of the above problems, one object of the present invention is to provide a mobile terminal, a system and a method that can achieve reliable continuous positioning without undermining inherent effectiveness of the continuous positioning.

### [MEANS FOR SOLVING THE PROBLEM]

In order to overcome the above object, one aspect of the present invention relates to a mobile terminal having a continuous positioning function, including a radio positioning unit configured to derive a position of the mobile terminal in continuous positioning, a movement detection unit configured to detect a movement distance and a traveling direction of the mobile terminal, a target zone setting unit configured to set a target zone based on a confirmed position of the mobile terminal determined as being valid in the continuous positioning and the movement distance and the traveling direction of the mobile terminal detected by the movement detection unit, the target zone comprising an area to which it is estimated that a user has moved and a validity determination unit configured to determine whether the position of the mobile terminal measured by the radio positioning unit is included in the set target zone to determine validity of the measured position of the mobile terminal.

Another aspect of the present invention relates to a system including a mobile terminal having a continuous positioning function, and a communication apparatus configured to wirelessly communicate with the mobile terminal, wherein the mobile terminal includes a radio positioning unit configured to derive a position of the mobile terminal in continuous positioning, a movement detection unit configured to detect a movement distance and a traveling direction of the mobile terminal, a target zone setting unit configured to set a target zone based on a confirmed position of the mobile terminal determined as being valid in the continuous positioning and the movement distance and the traveling direction of the mobile terminal detected by the movement detection unit, the target zone comprising an area to which it is estimated that a user has moved and a validity determination unit configured to determine whether the position of the mobile terminal measured by the radio positioning unit is included in the set target zone to determine validity of the measured position of the mobile terminal.

A further aspect of the present invention relates to a method for use in a mobile terminal having a continuous positioning function, including deriving a position of the mobile terminal in continuous positioning, detecting a movement distance and a traveling direction of the mobile terminal, setting a target zone based on a confirmed position of the mobile terminal determined as being valid in the continuous positioning and the detected movement distance and traveling direction of the mobile terminal, the target zone comprising an area to which it is estimated that a user has moved and determining validity of the measured position of the mobile terminal by determining whether the measured position of the mobile terminal is included in the set target zone.

A further aspect of the present invention relates to a storage medium for storing a program for causing a processor in a mobile terminal having a continuous positioning function to derive a position of the mobile terminal in continuous positioning, detect a movement distance and a traveling direction of the mobile terminal, set a target zone based on a confirmed position of the mobile terminal determined as being valid in the continuous positioning and the detected movement distance and traveling direction of the mobile terminal, the target zone comprising an area to which it is estimated that a user has moved and determine validity of the measured position of the mobile terminal by determining whether the measured position of the mobile terminal is included in the set target zone.

### [ADVANTAGE OF THE INVENTION]

According to the present invention, it is possible to provide a mobile terminal, a system and a method that can achieve reliable continuous positioning without undermining inherent effectiveness of the continuous positioning.

### BRIEF DESCRIPTION OF DRAWINGS

FIG. 1 is a schematic diagram of validity determination in continuous positioning according to one embodiment of the present invention;
FIG. 2 illustrates one exemplary functional arrangement of a mobile terminal according to one embodiment of the present invention;
FIG. 3 is a schematic diagram of target zones according to one embodiment of the present invention;
FIG. 4 is a schematic diagram of a target zone according to one embodiment of the present invention;
FIG. 5 is a schematic diagram of a target zone according to one embodiment of the present invention;
FIG. 6 is a schematic diagram of a target zone according to one embodiment of the present invention; and
FIG. 7 is a flow diagram for illustrating a validity determination operation in continuous positioning according to one embodiment of the present invention.

### EMBODIMENTS OF THE INVENTION

Embodiments of the present invention will be described below with reference to the drawings.

A mobile terminal according to the following embodiments of the present invention has a continuous positioning function of continuously or periodically measuring a position of the mobile terminal at a predefined measurement interval. In general, it is known that there is a possibility of positioning errors in the positioning at a mobile terminal due to wave conditions. To this end, a mobile terminal as disclosed below determines validity of positioning results acquired at each acquisition occasion in the continuous positioning and adopts as a valid positioning result a positioning result determined as being included in an area to which it is estimated that the mobile terminal has moved from a certain base point. In one embodiment, upon activation of the continuous positioning function by a user, an application and so on, the mobile terminal uses one or more radio based positioning schemes to continuously or periodically measure the position of the mobile terminal. The mobile terminal selects one of continuously or periodically measured positions as a candidate position targeted for validity determination. In this candidate selection, the most recently measured position may be selected from positions obtained in the continuous positioning, or a position associated with the smallest measurement error may be selected from the positions obtained in the continuous positioning. The mobile terminal sets a target zone estimated as a position to which the mobile terminal has moved based on a confirmed position of the mobile terminal as well as measured movement distance and traveling direction of the mobile terminal. The confirmed position is the position of the mobile terminal determined as being a valid positioning result in the last validity determination in the continuous positioning. The validity determination on the position of the mobile terminal as measured in accordance with a radio based positioning scheme is made by determining whether the measured position of the mobile terminal in accordance with the radio based positioning scheme is included in the set target zone.

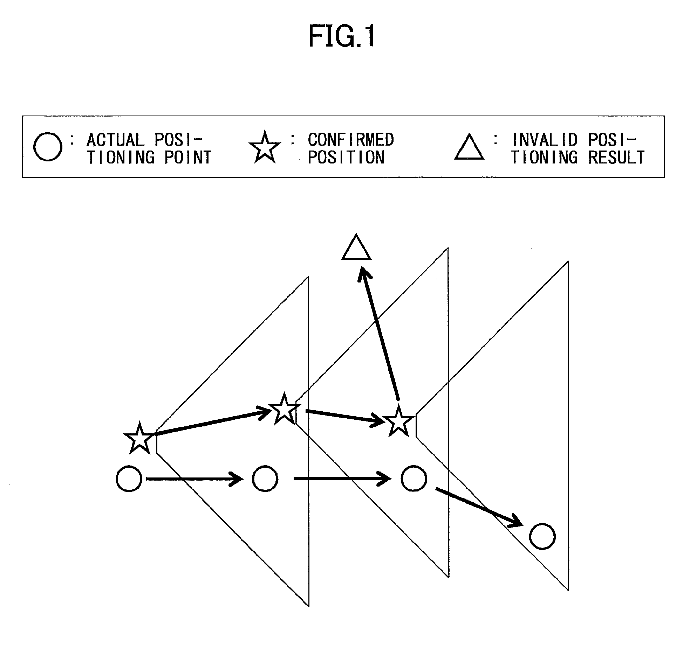

For example, as illustrated in FIG. 1, in the validity determination, the confirmed position corresponding to the previous valid positioning result is used as a base point, and a target zone is set as an area to which it is estimated that the user has moved from the base point. If a current point targeted for the validity determination is included in the target zone, the point is determined as being of high validity, that is, is determined as being valid. On the other hand, if the currently measured point is not included in the target zone, the positioning result is determined as being of insufficient validity and being invalid. The positioning result determined as being valid becomes a new confirmed position and serves as a base point of the target zone for the validity determination made on the next positioning result in the continuous positioning. According to this validity determination operation, in the example as illustrated in FIG. 1, the first to third positioning results are included in the target zone and accordingly are determined as being valid whereas the fourth positioning result is not included in the target zone and accordingly is determined as being invalid. As a result, it is possible to eliminate the inaccurate positioning result obtained under poor wave conditions such as a positioning result of a traveling direction different from a user's traveling direction and a positioning result corresponding to long jumps in distance.

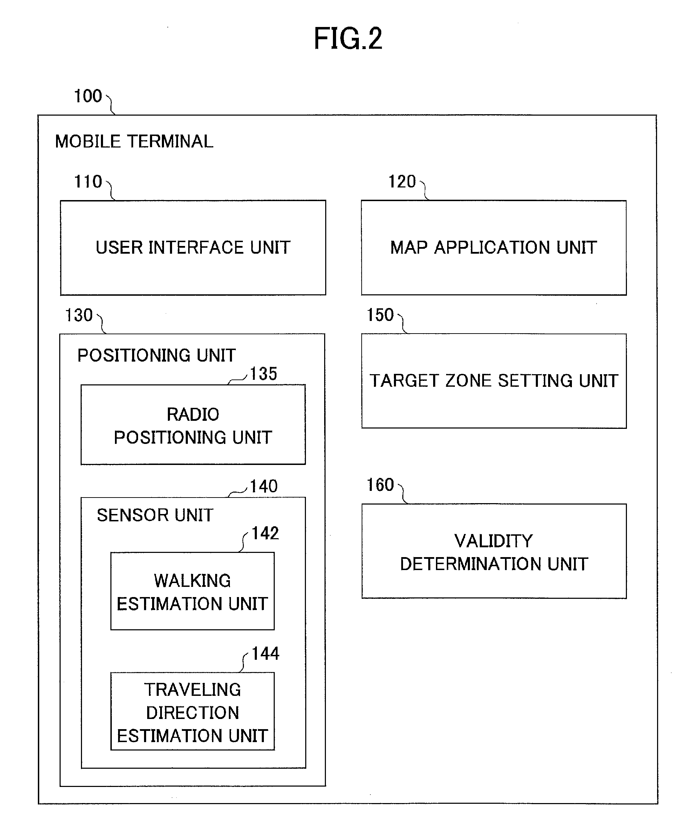

At the beginning, an arrangement of a mobile terminal according to one embodiment of the present invention is described with reference to FIG. 2.

The mobile terminal according to this embodiment is typically a portable information terminal, such as a mobile phone terminal or a smart phone, that can use applications installed in the terminal or information received from other communication apparatuses in a radio communication system to obtain a position of the mobile terminal.

The mobile terminal is typically composed of one or more various hardware resources such as an auxiliary storage device, a memory device, a CPU, a communication device, a display device, an input device and a measurement device. The auxiliary storage device is composed of a hard disk, a flash memory or others to store programs and data for implementing various operations described below. The memory device is composed of a RAM (Random Access Memory) or others and upon an activation instruction of a program, loads the program from the auxiliary storage device and stores the loaded program. The program may be recorded in a storage medium such as a CD-ROM (Compact Disk-Read Only Memory) and be stored in the memory device via a disk drive (not illustrated) capable of accommodating the storage medium. Alternatively, the program may be downloaded from an external server (not illustrated) via the communication device and be stored in the memory device. The CPU serves as a processor for processing information and implements various functions described below in accordance with programs stored in the memory device. The communication device is composed of various communication circuits for accessing a communication apparatus such as available base stations or access points in a radio communication system and connecting to an external device such as a server via the connecting communication apparatus.

The communication device according to this embodiment further includes a reception circuit for implementing a GPS function. The display device is composed of a display and displays a GUI (Graphical User Interface) with contents or programs received via a network and so on. The input device is typically composed of an operation button, a keyboard, a mouse and so on, and is used for a user of the mobile terminal to input various operational instructions. The measurement device is composed of various sensors for measuring movement of the mobile terminal such as an acceleration sensor, a geomagnetic sensor and a gyro sensor. Note that the mobile terminal according to the present invention is not limited to the above-stated hardware arrangement and may have any other appropriate hardware arrangements or software arrangements such as circuits for implementing various functions described below.

FIG. 2 illustrates one exemplary functional arrangement of a mobile terminal according to one embodiment of the present invention. In FIG. 2, a mobile terminal 100 includes a user interface unit 110, a map application unit 120, a positioning unit 130, a target zone setting unit 150 and a validity determination unit 160.

When a user activates a continuous positioning function via the input device, the user interface unit 110 displays a positioning point determined by the validity determination unit 160 as being valid on the display device. For example, the user interface unit 110 may obtain map information having the positioning point as the center from the map application unit 120 and display the positioning point determined as being valid by superimposing onto the obtained map information.

In response to receipt of positional information such as a latitude and a longitude of the positioning point from the user interface unit 110, the map application unit 120 retrieves map information having the positioning point as the center based on the received positional information and provides the retrieved map information to the user interface unit 110. In one embodiment, upon receiving the positional information from the user interface unit 110, the map application unit 120 connects to a server for storing the map information via a base station or an access point accessible to the mobile terminal 100 and obtains the map information corresponding to the received positional information from the server. In another embodiment, if the mobile terminal 100 itself stores the map information, the map application unit 120 may obtain the map information corresponding to the received positional information from the storage device. Here, the map application unit 120 extracts the map information on an area that can be accommodated in a screen on the display device in a predefined scale under the case where the positioning point is used as the center of the area. This scale may be requested by an application utilizing the positional information or may be set by the user.

The positioning unit 130 measures the position of the mobile terminal 100 by using multiple positioning schemes and detects a movement distance and a traveling direction of the mobile terminal 100. The positioning unit 130 provides the measured position, the movement distance and the traveling direction to the target zone setting unit 150 and the validity determination unit 160. In one embodiment, the multiple positioning schemes may be any appropriate positioning scheme that can be used to measure the position of the mobile terminal 100. For example, the positioning schemes may include one or more radio based positioning schemes that can measure the position of the mobile terminal 100 based on radio signals received from external communication apparatuses.

In the illustrated embodiment, the positioning unit 130 can use both a radio based positioning scheme and a sensor based positioning scheme as these multiple positioning schemes and then includes a radio positioning unit 135 and a sensor unit 140. In other embodiments, however, the positioning unit 130 may use the multiple radio based positioning schemes without use of the sensor based positioning scheme.

The radio positioning unit 135 uses one or more positioning scheme suitable for positioning of the mobile terminal 100 to measure the position of the mobile terminal 100 based on a radio signal received from an external communication apparatus in a radio communication system and transmits the measured position to the validity determination unit 160. Upon receiving multiple positioning results from the radio positioning unit 135, the validity determination unit 160 may select a candidate targeted for validity determination from the multiple positioning results in accordance with any selection criteria. For example, the validity determination unit 160 may select the most recently measured positioning result as the candidate targeted for the validity determination or select a positioning result obtained in a positioning scheme expected to have a small estimation error as the candidate targeted for the validity determination. Typical radio based positioning schemes include GPS based positioning, base station based positioning and WLAN based positioning, for example.

The GPS based positioning estimates the position of the mobile terminal 100 based on GPS signals received from GPS satellites traveling around the orbit of the earth. In the typical GPS positioning, the mobile terminal 100 receives GPS signals from three or more GPS satellites and uses any known calculation method to measure the position of the mobile terminal 100 based on the received GPS signals. In general, as the GPS signals can be received from more GPS satellites, more accurate positioning can be achieved.

The base station based positioning typically estimates the position of the mobile terminal 100 based on positional information of a serving base station received from the serving base station. Also, in other base station based positioning, the position of the mobile terminal 100 is estimated based on timing information transmitted from multiple base stations.

The WLAN based positioning estimates the position of the mobile terminal 100 based on a MAC address of a WLAN access point included in a beacon signal received from the WLAN access point and electric field intensity of the beacon signal.

Since the GPS based positioning, the base station based positioning and the WLAN based positioning have respective specific measurement accuracy and any of them is the positioning scheme which uses radio communication, it is known that the positioning result may be affected by wave conditions.

The radio positioning unit 135 uses any one or more positioning schemes to measure the position of the mobile terminal 100 and determine a candidate targeted for validity determination. Meanwhile, the radio positioning unit 135 provides positioning results obtained in other positioning schemes to the target zone setting unit 150 to set a target zone. The positioning results provided to the target zone setting unit 150 may be the position itself or may be calculations of the movement distance and the traveling direction.

The sensor unit 140 detects movement of the mobile terminal 100 through autonomous positioning and derives the movement distance and the traveling direction of the mobile terminal 100. Specifically, the sensor unit 140 uses various sensors to measure a movement amount of the mobile terminal 100 for a positioning period and transmits the measured movement amount as sensor information to the target zone setting unit 150. Herein, "autonomous positioning" means that it is positioning through various sensors, such as an acceleration sensor, a geomagnetic sensor and a gyro sensor, in the mobile terminal 100 without use of any information provided from an external device of the mobile terminal 100. In the illustrated embodiment, the sensor unit 140 includes a walking estimation unit 142 and a traveling direction estimation unit 144.

The walking estimation unit 142 counts steps of a user taking the mobile terminal for the positioning period and estimates the walking distance from a base point of the current positioning by multiplying the counted steps with a user's configured stride length. In this embodiment, the base point of the positioning is set to a positioning point determined by the validity determination unit 160 as being the most recently valid in continuous positioning prior to the current positioning period, that is, the base point of the positioning is set as the confirmed position to the previous positioning point determined as being valid. The walking estimation unit 142 can be typically implemented by an acceleration sensor. However, the walking estimation unit 142 may be, but not limited to, implementation by any device capable of counting a user' s steps or measuring a user's walking distance appropriately.

The traveling direction estimation unit 144 detects the traveling direction of a user taking the mobile terminal 100 for a positioning period and estimates a change amount of the traveling direction based on the maximum angle and the minimum angle of the detected traveling direction. The traveling direction estimation unit 144 can be typically implemented by a geomagnetic sensor or a gyro sensor. However, the traveling direction estimation unit 144 may be, but not limited to, implementation by any other appropriate device capable of detecting user's traveling direction and measuring variations of the traveling direction. In general, if the geomagnetic sensor or the gyro sensor are used, the traveling direction is measured relative to magnetic north. Similar to the walking estimation unit 142, the traveling direction estimation unit 144 sets a positioning point determined by the validity determination unit 160 as being the most recently valid in continuous positioning prior to the current positioning period, that is, the confirmed position defined as the positioning result determined as being valid at the previous occasion as the base point of the traveling direction.

Based on the confirmed position of the mobile terminal 100 previously determined as being valid in the continuous positioning as well as the movement distance and the traveling direction of the mobile terminal 100 measured in accordance with one or more of multiple positioning schemes, the target zone setting unit 150 sets a target zone as an area to which it is estimated that the user has moved from the base point defined as the confirmed position and then indicates the set target zone to the validity determination unit 160. In the illustrated embodiment, the target zone setting unit 150 sets the target zone based on the walking distance and the maximum and minimum angles of the traveling direction for the positioning period received from the sensor unit 140. Note that an absolute position of the mobile terminal is initially obtained through the GPS based positioning in initial determination occasion and uses the obtained position as the base point for setting the initial target zone.

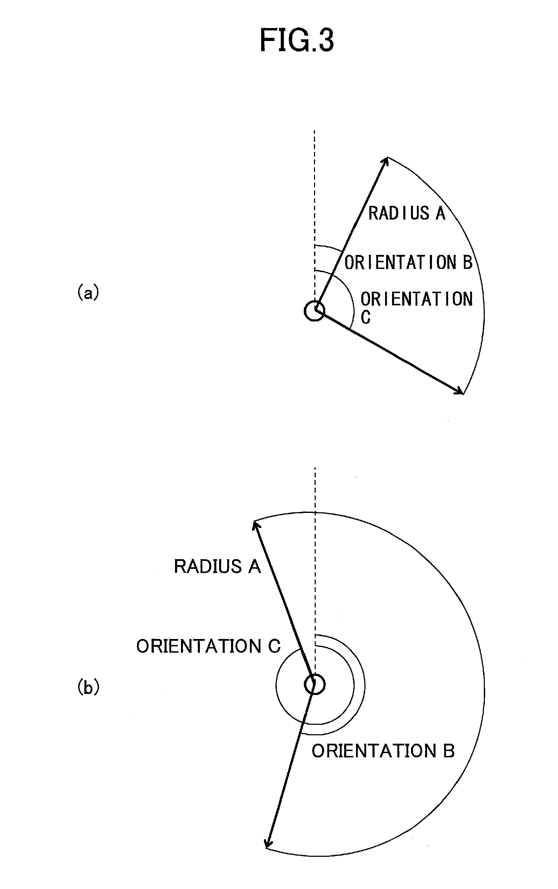

In one embodiment, as illustrated in FIG. 3 (a), the target zone setting unit 150 sets the target zone as a fan-shaped area such that the confirmed position corresponding to the previous valid positioning result is used as the center of the fan-shaped area, the walking distance A received from the sensor unit 140 is used as the length of the radius of the fan-shaped area, and the fan-shaped area has the radius defined by the minimum angle (orientation) B and the maximum angle (orientation) C of the traveling direction. As understood from such a target zone setting method, if the user is walking in a nearly straight line, the fan-shaped target zone is set to have a small central angle with the center corresponding to the straight traveling direction. In this case, the target zone will have a relatively small area, which could effectively eliminate less valid positioning results that significantly deviate from the straight traveling direction. On the other hand, if the user deviates, as illustrated in FIG. 3(b), the fan-shaped target zone is set to have a large central angle with the center corresponding to the confirmed position. In this case, the target zone will have a relatively large area, which could determine more position results as being valid depending on the user's deviation.

The validity determination unit 160 determines whether a candidate targeted for validity determination is included in the target zone set by the target zone setting unit 150 to determine validity of the candidate. Specifically, the validity determination unit 160 selects one positioning result as the candidate targeted for the validity determination from several radio based positioning results obtained by the positioning unit 130 in accordance with a radio based positioning scheme and determines the validity of the position measured by the positioning unit 130 by determining whether the candidate is included in the target zone set by the target zone setting unit in accordance with a positioning scheme different from that used for the selected candidate. The selection of the candidate targeted for the validity determination may be made by the radio positioning unit 135 as stated above.

Here, the validity determination unit 160 may select a candidate positioning result targeted for the validity determination from multiple positioning results in accordance with any selection criteria. For example, the validity determination unit 160 may determine the candidate positioning result targeted for the validity determination based on information at deriving the positioning results. Specifically, the validity determination unit 160 may select the most recently measured positioning result as the candidate targeted for the validity determination or select a positioning result obtained in a positioning scheme expected to have a small estimation error as the candidate targeted for the validity determination. In the latter case, when three positioning results have been obtained in accordance with the GPS based positioning, the base station based positioning and the WLAN based positioning, the validity determination unit 160 may select the positioning result of the GPS based positioning. This is because the GPS based positioning generally has positioning accuracy higher than the base station based positioning and the WLAN based positioning.

If the selected candidate targeted for the validity determination is included in the target zone, the validity determination unit 160 determines that the positioning result is reliable and adopts the position as a valid positioning point. In this case, the validity determination unit 160 indicates the adopted position to the user interface unit 110, and the user interface unit 110 may display the position to the user by superimposing onto map information. On the other hand, if the selected candidate targeted for the validity determination is not included in the target zone, the validity determination unit 160 determines that the measured position is inconsistent with user's actual movement distance and traveling direction and is less valid. As a result, the validity determination unit 160 does not adopt the position as the valid positioning point. In this case, the validity determination unit 160 may request the positioning unit 130 to conduct the positioning again and repeat the above-stated operations.

In an embodiment of the present invention, the target zone setting unit 150 may set the target zone based on a positioning result obtained in accordance with any of the above-stated various positioning schemes. In one embodiment, the target zone setting unit 150 may set the target zone based on a positioning result of the radio positioning unit 135. In other words, if the radio positioning unit 135 can use two or more radio based positioning schemes to obtain multiple positioning results, the target zone setting unit 150 may determine one of the multiple positioning results as the candidate targeted for the validity determination and use the other positioning results to set the target zone. The validity determination unit 160 determines whether the candidate targeted for the validity determination is included in the target zone set in accordance with another positioning scheme to determine the validity of the candidate targeted for the validity determination.

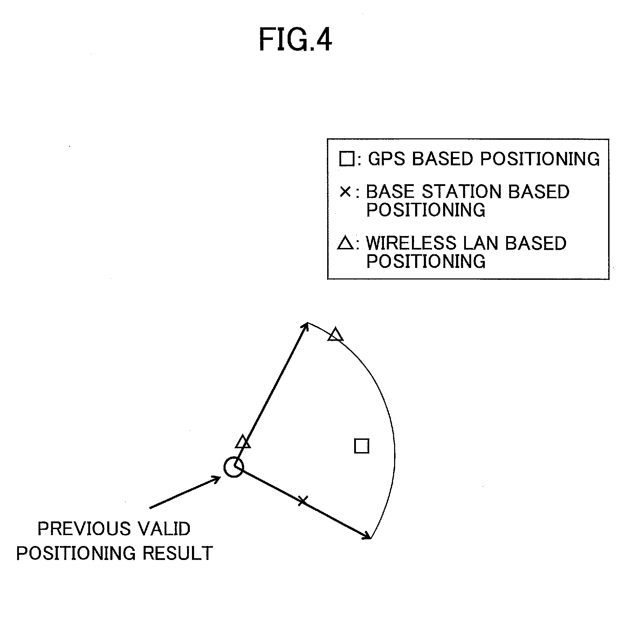

For example, if the radio positioning unit 135 can use the three radio based positioning schemes, that is, the GPS based positioning, the base station based positioning and the WLAN based positioning, to obtain respective positioning results in the radio based positioning schemes, the target zone setting unit 150 may determine a positioning result (□) in the GPS based positioning as the candidate targeted for the validity determination based on information at deriving the positioning result and set the target zone based on the positioning result (×) in the base station based positioning and the positioning result (△) in the WLAN based positioning, as illustrated in FIG. 4. In FIG. 4, the target zone setting unit 150 sets the target zone based on the confirmed position corresponding to the previous valid positioning result and one obtained positioning result (×) in the base station based positioning and two obtained positioning results (Δ) in the WLAN based positioning and determines the validity of the candidate targeted for the validity determination by determining whether the positioning result (□) in the GPS based positioning serving as the candidate targeted for the validity determination is included in the set target zone. Specifically, the target zone setting unit 150 sets the radius of a fan-shaped area based on the farthest WLAN based positioning result (△) away from the confirmed position. Also, if the confirmed position is supposed to be at the center of the fan-shaped area, the target zone setting unit 150 determines the other WLAN based positioning result (△) locating at a relatively small angle as the minimum angle whereas the target zone setting unit 150 determines the base station based positioning result (×) locating at a relatively large angle as the maximum angle. The target zone setting unit 150 sets the fan-shaped target zone as illustrated based on the radius, the minimum angle and the maximum angle. This embodiment has an advantage in that even if sensor information is unavailable, the validity determination can be made. For example, if a user is moving with a car, a train, a bicycle or means other than walking, the sensor information may not be effectively available. In such a case, this embodiment without use of the sensor information is preferably applicable.

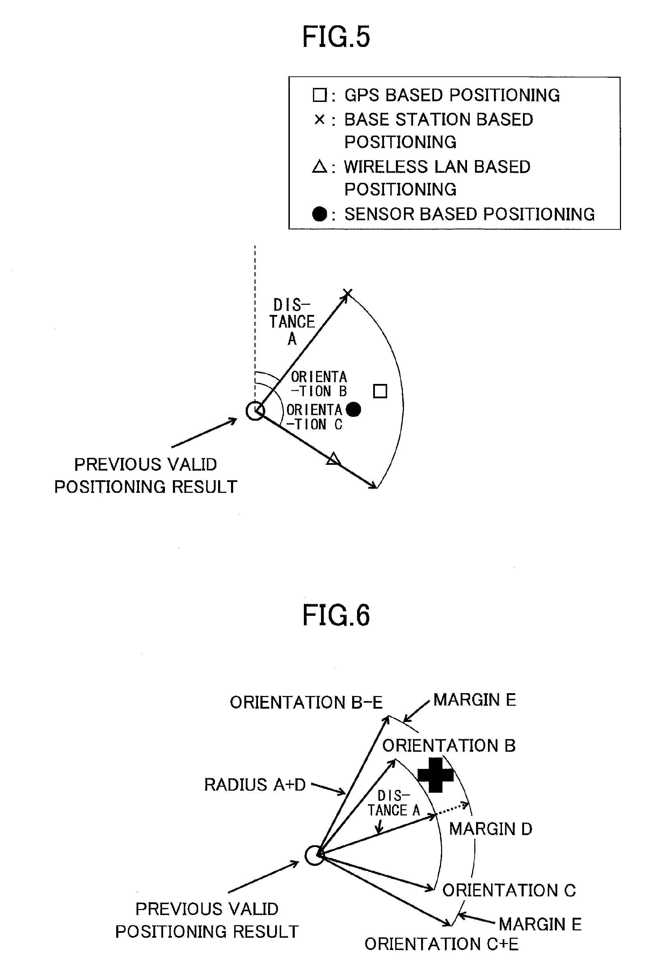

Also, in other embodiments, the target zone setting unit 150 may use both the sensor information from the sensor unit 140 and the positioning result from the radio based positioning unit 135 to set the target zone. Specifically, if the radio positioning unit 135 can use two or more positioning schemes to obtain multiple positioning results, the target zone setting unit 150 may determine one of the multiple positioning results as a candidate targeted for the validity determination and use both the other positioning results and the sensor information from the sensor unit 140 to set the target zone. Similar to the above-stated embodiments, the validity determination unit 160 determines the validity of the candidate targeted for the validity determination by determining whether the candidate targeted for the validity determination is included in the set target zone. In conjunction with this embodiment, for example, if the positioning unit 130 can use the three positioning schemes, that is, the GPS based positioning, the base station based positioning and the WLAN based positioning, to obtain respective positioning results in the positioning schemes, the target zone setting unit 150 may use the GPS based positioning result (□) as the candidate targeted for the validity determination and set the target zone based on the confirmed position, the base station based positioning result (×), the WLAN based positioning result (△) and the positioning result (●) from the sensor unit 140, as illustrated in FIG. 5. In FIG. 5, the target zone setting unit 150 sets the target zone based on the obtained single base station based positioning result (×), the obtained single WLAN based positioning result (△) and the positioning result (●) from the sensor unit 140 and determines the validity of the candidate targeted for the validity determination by determining whether the GPS based positioning result (□) serving as the candidate targeted for the validity determination is included in the target zone. Specifically, the target zone setting unit 150 sets the radius of a fan-shaped area based on the farthest base station based positioning result (×) away from the confirmed position corresponding to the previous valid positioning result. Also, if the confirmed position is supposed to be at the center of the fan-shaped area, the target zone setting unit 150 determines the base station based positioning result (×) locating at a relatively small angle as the minimum angle and the WLAN based positioning result (△) locating at a relatively large angle as the maximum angle. The target zone setting unit 150 sets a fan-shaped target zone based on the radius, the minimum angle and the maximum angle. Since the target zone is set by using the positioning results in accordance with the radio based positioning schemes together with the sensor information, this embodiment can implement the validity determination with higher accuracy than the case of utilization of only the sensor information.

In other embodiments, the target zone setting unit 150 may set the target zone by adding a margin in consideration of measurement errors. In the embodiment as illustrated in FIG. 6, upon receiving the walking distance and the maximum and minimum angles of the traveling direction measured in the current measurement period, the target zone setting unit 150 uses the confirmed position corresponding to the previous valid positioning result as the center of a fan-shaped area and the length (A+D) resulting from addition of a margin D to the walking distance A received from the sensor unit 140 as the length of the radius of the fan-shaped area. Then, the target zone setting unit 150 sets as the target zone the fan-shaped area whose radius is defined by the orientation (B-E) resulting from subtraction of a margin E from the minimum angle B of the traveling direction and the orientation (C+E) resulting from addition of a margin E to the maximum angle C. In this embodiment, as illustrated in FIG. 6, the enlarged target zone is set compared to the target zone without the margins D and E.

Here, the margins D and E may be predefined values or dynamically variable values. For example, the margins D and E may be set depending on a required accuracy of positioning results. For example, if the user interface unit 110 displays the position of the mobile terminal 100 on small-scaled (large geographical area covered) map information, positioning results with a relatively high accuracy may not be needed. In this case, large margins D and E may be set. On the other hand, if the user interface unit 110 displays the position of the mobile terminal 100 on large-scaled (small geographical area covered) map information, positioning results with a relatively high accuracy may be needed. In this case, small margins D and E may be set. According to this embodiment, it is possible to set the target zone in consideration of acceptable measurement errors.

Also, in the above-stated embodiment, the fan-shaped target zone has been used. However, the present invention is not limited to it, and any appropriately shaped target zone representing an area estimated for user's movement may be used. For example, the target zone may be an isosceles triangle having the confirmed position corresponding to the previous valid positioning result as the apex, the walking distance A received from the positioning unit 130 as the height between the apex and the bottom line and the difference between the minimum angle B and the maximum angle C of the traveling direction as the apex angle.

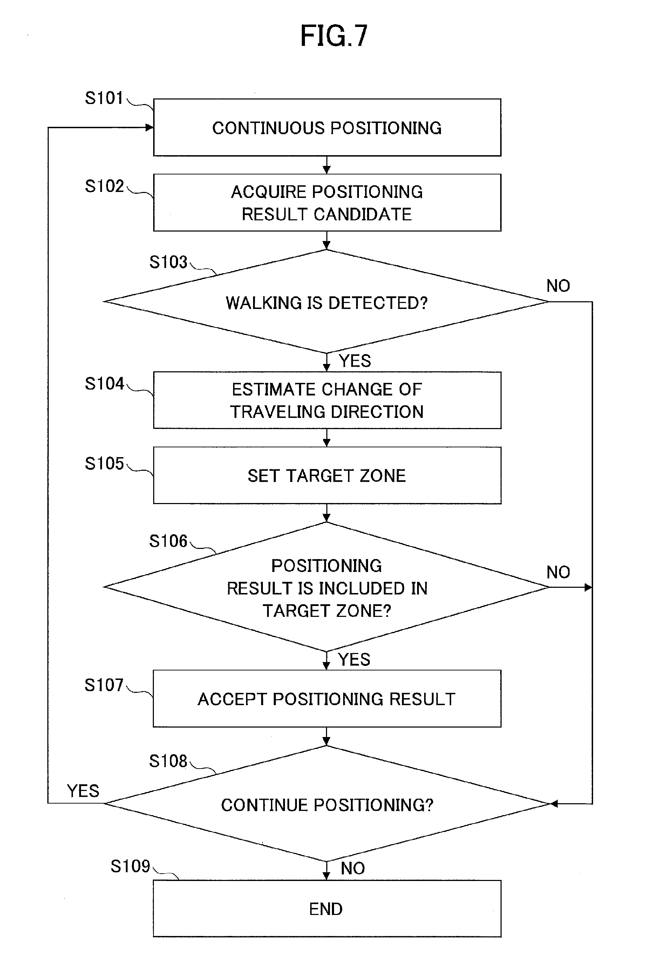

Next, one exemplary operation of a mobile terminal according to one embodiment of the present invention is described with reference to FIG. 7. FIG. 7 is a flow diagram for illustrating a validity determination operation on continuous positioning according to one embodiment of the present invention.

As illustrated in FIG. 7, at step S101, for example, in response to a positioning activation instruction from a user, the mobile terminal 100 starts the continuous positioning.

At step S102, the positioning unit 130 measures the position of the mobile terminal 100 in accordance with one or more radio based positioning schemes and provides positioning results to the target zone setting unit 150 and the validity determination unit 160. Upon receiving multiple positioning results from the positioning unit 130, the validity determination unit 160 determines a candidate positioning result targeted for validity determination from the received multiple positioning results. As stated above, the validity determination unit 160 may select the candidate positioning result targeted for the validity determination from the received multiple positioning results in accordance with any selection criteria. For example, the validity determination unit 160 may determine the candidate positioning result targeted for the validity determination based on information at deriving the positioning result. Specifically, the validity determination unit 160 may select the most recently measured positioning result as the candidate targeted for the validity determination or select a positioning result obtained in a positioning scheme predicted to have small estimation errors as the candidate targeted for the validity determination. In this embodiment, the validity determination unit 160 selects the candidate targeted for the validity determination, but the present invention is not limited to it. The positioning unit 130 may select the candidate targeted for the validity determination from multiple positioning results. Then, the positioning unit 130 may provide the selected candidate targeted for the validity determination to the validity determination unit 160 whereas the positioning unit 130 may provide other positioning results obtained in a positioning scheme different from the positioning scheme associated with the positioning result provided to the validity determination unit 160 to the target zone setting unit 150. Also, if the target zone is set based on the movement distance and the traveling direction received from the sensor unit 140, the positioning unit 130 may selectively provide the positioning results, for example, without providing the above-stated other positioning results to the target zone setting unit 150.

At step S103, the walking estimation unit 142 detects whether a user is walking. Specifically, the walking estimation unit 142 estimates the walking distance from acceleration data or step data obtained from the timing of obtaining the previous valid positioning result to the present timing and if the estimated walking distance is greater than or equal to a predefined threshold, determines that the user is walking.

If the estimated walking distance is greater than or equal to the predefined threshold and it is accordingly determined that the user is walking (S103: YES), the process proceeds to step S104. On the other hand, if the estimated walking distance is less than the predefined threshold and it is accordingly determined that the user is not walking (S103: NO), the process proceeds to step S108.

At step S104, the traveling direction estimation unit 144 estimates a change of user's traveling direction. Specifically, the traveling direction estimation unit 144 estimates a change of the traveling direction from orientation data or angular velocity data obtained from the timing of obtaining the previous valid positioning result to the present timing and estimates a change amount of the traveling direction. In one embodiment, the traveling direction estimation unit 144 extracts the minimum angle and the maximum angle from the obtained orientation data or angular velocity data and sets a range between the minimum angle and the maximum angle as the change amount of the traveling direction.

At step S105, the target zone setting unit 150 sets a target zone based on the walking distance estimated by the walking estimation unit 142 and the minimum and maximum angles estimated by the traveling direction estimation unit 144. Specifically, the target zone setting unit 150 sets the target zone as a fan-shaped area such that it has the confirmed position corresponding to the previous valid positioning result as the center, the walking distance A as the length of the radius and the radius defined by the minimum angle B and the maximum angle C of the traveling direction. Alternatively, the target zone setting unit 150 sets the target zone as a fan-shape area such that it has the confirmed position as the center, the walking distance A plus the margin D, that is, (A+D) as the length of the radius and the radius defined by the minimum angle B of the traveling direction minus the margin E, that is, (B-E) and the maximum angle C plus the margin E, that is, (C+E).

At step S106, the validity determination unit 160 determines whether the candidate targeted for the validity determination obtained at step S102 is included in the target zone set at step S105. If the candidate targeted for the validity determination is included in the target zone (S106: YES), the validity determination unit 160 determines that the candidate targeted for the validity determination is reliable and at step S107, adopts the positioning result as a valid positioning result. In this case, the user interface unit 110 may display the determined valid positioning result to the user with superimposing onto map information. Alternatively, the validity determination unit 160 may indicate the determined valid positioning result to an application using this positional information and cause the application to use the valid positioning result for subsequent operations.

On the other hand, if the candidate targeted for the validity determination is not included in the target zone (S106: NO), the validity determination unit 160 determines that the candidate targeted for the validity determination is less valid, and the process proceeds to step S108.

At step S108, the mobile terminal 100 determines whether it should maintain the continuous positioning by determining whether a predefined event has arisen such as a positioning end instruction from the user or the application. If the continuous positioning should be maintained (S108: YES), the process returns to step S101, and the above-stated operations are repeated. Specifically, the current candidate targeted for the validity determination is adopted as the valid positioning result at step S107, and if the valid positioning point is updated, a new target zone is set by using the updated valid positioning point as a base point. On the other hand, if no walking is detected at step S103 or the current candidate targeted for the validity determination is not adopted as the valid positioning result at step S106, the valid positioning point is maintained with the previous valid positioning result, and a new target zone is set by using the maintained valid positioning point as the base point.

On the other hand, if the continuous positioning should not be maintained (S108: NO), the process proceeds to step S109 and is terminated.

The specific embodiments of the present invention have been described above, but the present invention is not limited to the specific embodiments, various variations and modifications can be made within the spirit of the present invention as appended in claims.

This international patent application is based on Japanese Priority Application No. 2012-144710 filed on June 27, 2012, the entire contents of which are hereby incorporated by reference.

### LIST OF REFERENCE SYMBOLS

- 100:: mobile terminal
- 110:: user interface unit
- 120:: map application unit
- 130:: positioning unit
- 135:: radio positioning unit
- 140:: sensor unit
- 142:: walking estimation unit
- 144:: traveling direction estimation unit
- 150:: target zone setting unit
- 160:: validity determination unit

## Claims

1. A mobile terminal having a continuous positioning function, comprising:
a radio positioning unit configured to derive a position of the mobile terminal in continuous positioning;
a movement detection unit configured to detect a movement distance and a traveling direction of the mobile terminal;
a target zone setting unit configured to set a target zone based on a confirmed position of the mobile terminal determined as being valid in the continuous positioning and the movement distance and the traveling direction of the mobile terminal detected by the movement detection unit, the target zone comprising an area to which it is estimated that a user has moved; and
a validity determination unit configured to determine whether the position of the mobile terminal measured by the radio positioning unit is included in the set target zone to determine validity of the measured position of the mobile terminal.

2. The mobile terminal as claimed in claim 1, wherein the movement detection unit has a sensor that autonomously detects movement of the mobile terminal and derives the movement distance and the traveling direction of the mobile terminal.

3. The mobile terminal as claimed in claim 1, wherein
the radio positioning unit detects the position of the mobile terminal based on received radio signals in accordance with two or more radio based positioning schemes and derives the movement distance and the traveling direction of the mobile terminal,
the target zone setting unit sets the target zone by using the confirmed position as a base point based on the movement distance and the traveling direction derived by the radio positioning unit in accordance with one or more first radio based positioning schemes, and
the validity determination unit determines the validity of the position derived by the radio positioning unit in accordance with a second radio based positioning scheme different from the one or more first radio based positioning schemes.

4. The mobile terminal as claimed in claim 1, wherein the target zone setting unit enlarges the target zone by a set margin.

5. The mobile terminal as claimed in claim 1, wherein after detecting positions of the mobile terminal, the radio positioning unit determines a position targeted for determining the validity from the positions based on information at deriving the positions.

6. The mobile terminal as claimed in claim 1, further comprising:
a user interface unit configured to provide an interface between the mobile terminal and the user; and
a map application unit configured to provide map information to the user interface unit,
wherein the user interface unit obtains map information from the map application unit, the map information having the position determined by the validity determination unit as being valid as a center of the map information, and displays the obtained map information to the user by superimposing the position onto the obtained map information.

7. A system, comprising:
a mobile terminal having a continuous positioning function; and
a communication apparatus configured to wirelessly communicate with the mobile terminal,
wherein the mobile terminal includes:
a radio positioning unit configured to derive a position of the mobile terminal in continuous positioning;
a movement detection unit configured to detect a movement distance and a traveling direction of the mobile terminal;
a target zone setting unit configured to set a target zone based on a confirmed position of the mobile terminal determined as being valid in the continuous positioning and the movement distance and the traveling direction of the mobile terminal detected by the movement detection unit, the target zone comprising an area to which it is estimated that a user has moved; and
a validity determination unit configured to determine whether the position of the mobile terminal measured by the radio positioning unit is included in the set target zone to determine validity of the measured position of the mobile terminal.

8. A method for use in a mobile terminal having a continuous positioning function, comprising:
deriving a position of the mobile terminal in continuous positioning;
detecting a movement distance and a traveling direction of the mobile terminal;
setting a target zone based on a confirmed position of the mobile terminal determined as being valid in the continuous positioning and the detected movement distance and traveling direction of the mobile terminal, the target zone comprising an area to which it is estimated that a user has moved; and
determining validity of the measured position of the mobile terminal by determining whether the measured position of the mobile terminal is included in the set target zone.

9. A storage medium for storing a program for causing a processor in a mobile terminal having a continuous positioning function to:
derive a position of the mobile terminal in continuous positioning;
detect a movement distance and a traveling direction of the mobile terminal;
set a target zone based on a confirmed position of the mobile terminal determined as being valid in the continuous positioning and the detected movement distance and traveling direction of the mobile terminal, the target zone comprising an area to which it is estimated that a user has moved; and
determine validity of the measured position of the mobile terminal by determining whether the measured position of the mobile terminal is included in the set target zone.
